# EUROPÄISCHE PATENTANMELDUNG

(11) **EP 2 833 035 A1**
(43) Veröffentlichungstag der Anmeldung: **04.02.2015**
(21) Anmeldenummer: 14175338.4
(22) Anmeldetag: 02.07.2014
(51) Int. Cl.: F16K 7/14, F16K 11/02, F16K 11/044

(54) **Bauteil für eine Ventileinrichtung**

(30) Priorität: 02.08.2013 DE 102013215295
(71) Anmelder: Gemü Gebr. Müller Apparatebau Gmbh & Co. Kommanditgesellschaf, 74653 Ingelfingen (DE)
(72) Erfinder: Frankenbach, Klaus, 74670 Forchtenberg-Schleierhof (DE)
(74) Vertreter: DREISS Patentanwälte PartG mbB

(57) **Zusammenfassung**

Es wird ein Bauteil (2) für eine Ventileinrichtung beschrieben. Das Bauteil (2) weist einen Schließabschnitt (6) auf, der in einem Endmontagezustand zum Verschließen eines Sitzbereichs der Ventileinrichtung ausgebildet ist. Der Schließabschnitt (6) weist in einem Montagezustand einen ersten Außendurchmesser auf. Der Schließabschnitt (6) weist in dem Endmontagezustand einen zweiten Außendurchmesser auf.

## Beschreibung

Die Erfindung betrifft ein Bauteil für eine Ventileinrichtung nach dem Oberbegriff des Anspruchs 1.

Bauteile mit einem Schließabschnitt, der zum Verschließen eines Sitzbereichs einer Ventileinrichtung ausgebildet ist, sind bekannt.

Aus der WO 96/21816 ist ein Dreiwegeventil bekannt, bei dem ein Ventilschaft zwischen einem oberen und unterem Ende einen vergrößerten Durchmesser aufweist.

Die WO2012/030708 A2 betrifft ein Ventil mit einer flexiblen Dichtungsmembran.

Die DE 197 34 533 A1 betrifft ein Ventil, bei dem ein Stößel aus einem gummiartigen Material besteht und koaxial zu seiner Längsachse eine Ausnehmung aufweist, in die ein starres Verstärkungselement einsetzbar ist.

Das der Erfindung zugrunde liegende Problem wird nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als in unterschiedlichen Kombinationen für die Erfindung wichtig sein können, ohne das hierauf nochmals explizit hingewiesen wird.

Dadurch, dass ein Schließabschnitt eines Bauteils in einen Montagezustand einen ersten Außendurchmesser aufweist und in einem Endmontagezustand einen zweiten Durchmesser aufweist, kann eine schnellere und flexiblere Montage durchgeführt werden. Darüber hinaus ist es durch das vorstehende Merkmal möglich, die Anzahl der Einzelteile einer Ventileinrichtung deutlich zu Reduzieren. Des Weiteren wird die Anzahl von Dichtstellen reduziert, da eine einteilige Ausführung von Schließabschnitt und Bauteil vorgesehen ist.

In einer vorteilhaften Ausführungsform des Bauteils ist der zweite Außendurchmesser größer als der erste Außendurchmesser. Dadurch kann ein Einführen in den Ventilkörper während der Montage mittels des ersten Außendurchmessers durchgeführt werden, wodurch sich das Bauteil im Bereich des Schließabschnitts durch Öffnungen führen lässt, die kleiner als der zweiten Außendurchmesser sind. Insbesondere bei einem Ventilraum mit zwei sich gegenüberliegenden Sitzabschnitten, die jeweils einen kleineren Durchmesser als den zweiten Außendurchmesser aufweisen, trägt das Bauteil zu einer vereinfachten und damit schnelleren Montage der Ventileinrichtung bei. Darüber hinaus kann auch ein Wechsel des Bauteils auf einfache Art und Weise durchgeführt werden, wodurch sich Vorteile bei der Wartung der Ventileinrichtung ergeben.

In einer weiteren vorteilhaften Ausführungsform des Bauteils ist der Schließabschnitt derart ausgebildet, das eine Stauchung des Schließabschnitts entlang einer Achse des Bauteils zu einer Vergrößerung des Schließabschnitts auf den zweiten Außendurchmesser führt. Durch die Stauchung kann auf einfache Art und Weise der Schließabschnitt auf den zweiten Außendurchmesser gebracht werden.

Bei einer weiteren vorteilhaften Ausführungsform weist der Schließabschnitt zwischen einem ersten Unterabschnitt und einem zweiten Unterabschnitt eine erste Ausnehmung auf. Durch die erste Ausnehmung wird ein Stauchen des Schließabschnitts unterstützt und gleichzeitig ein einfacheres Erreichen des zweiten Außendurchmessers ermöglicht.

In einer weiteren Ausführungsform des Bauteils weist der Schließabschnitt im Längsschnitt zu seinen Enden hin jeweils eine zweite Ausnehmung auf. Die zweite Ausnehmung unterstützt ebenfalls das Erreichen des zweiten Außendurchmessers über die Stauchung.

In einer weiteren Ausführungsform ist die erste Ausnehmung radial innenliegend ausgeführt und die zweite Ausnehmung radial außenliegend ausgeführt. Vorteilhaft kann der Endmontagezustand einfach und sicher erreicht werden.

In einer weiteren vorteilhaften Ausführungsform weist das Bauteil eine insbesondere längs durch den Schließabschnitt verlaufende dritte Ausnehmung auf, die derart ausgestaltet ist, dass eine Antriebsstange eines Ventilantriebs in der dritten Ausnehmung aufnehmbar ist. Das Bauteil weist zu beiden Seiten des Schließabschnitts jeweils einen distalen Befestigungsabschnitt und einen proximalen Befestigungsabschnitt auf. Die Befestigungsabschnitte sind derart ausgestaltet, dass mittels der Antriebsstange die Länge des Schließabschnitts beeinflussbar ist. Damit kann vorteilhaft die Antriebsstange als Montagehilfsmittel dienen und den Endmontagezustand herbeiführen. Darüber hinaus kann die Antriebsstange bei entsprechender Ausführung des Bauteils vor Fluiden geschützt werden.

Bei einer vorteilhaften Weiterbildung des Bauteils weist der distale Befestigungsabschnitt ein Innengewinde auf. Der proximale Befestigungsabschnitt weist eine den distalen Befestigungsabschnitt abgewandte Abstützfläche auf. Das Innengewinde und die Abstützfläche sind derart ausgestattet, um mittels eines Abstützens der Antriebsstange an der Abstützfläche des proximalen Befestigungsabschnitts und mittels eines Eindrehens der Antriebsstange, die ein zu dem Innengewinde des distalen Befestigungsabschnitts korrespondierendes Außengewinde aufweist, in das Innengewinde den Schließabschnitt zu stauchen. Hierdurch wird insgesamt die Montage des gesamten Ventilelements verbessert, da das Erreichen des zweiten Außendurchmessers für den Endmontagezustand allein über ein Eindrehen der Antriebsstange möglich ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer jeweiligen Zusammenfassung in den Patentansprüche oder deren Rückbeziehung sowie unabhängig von der Formulierung bzw. Darstellung in der Beschreibung bzw. in der Zeichnung.

Nachfolgend werden beispielhafte Ausführungsformen der Erfindung unter Bezugnahme auf die Zeichnung erläutert. In der Zeichnung zeigen:
- Figur 1: ein schematisch dargestelltes Bauteil für eine Ventileinrichtung;
- Figur 2: eine schematisch dargestellte Ventileinrichtung in einem Montagezustand,
- Figuren 3 und 4: die Ventileinrichtung aus Figur 2 in einem Endmontagezustand.

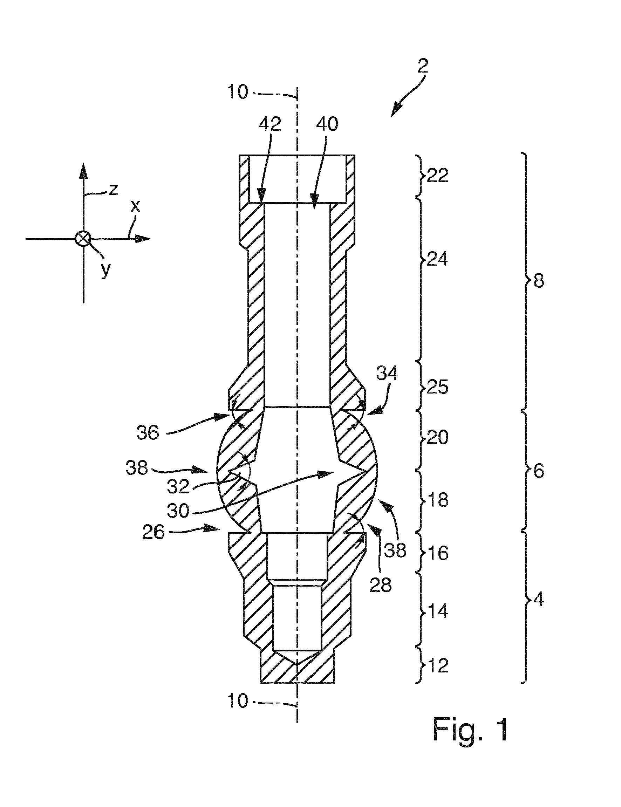

Figur 1 zeigt in schematischer Form ein Bauteil 2 für eine Ventileinrichtung. Das Bauteil 2 ist bevorzugt einteilig ausgeführt. Das Bauteil 2 ist in der Figur 1 in einem Montagezustand gezeigt, der sich wie nachfolgend erläutert von einem Endmontagezustand unterscheidet. Das Bauteil 2 weist in z-Richtung einen distalen Abschnitt 4, einen Schließabschnitt 6 und einen proximalen Abschnitt 8 auf. Das Bauteil 2 ist im Wesentlichen rotationssymmetrisch um eine Längsachse 10 aufgebaut.

Der distale Abschnitt 4 weist einen Endabschnitt 12, einen distalen Befestigungsabschnitt 14 und einen weiteren Abschnitt 16 auf. Der Schließabschnitt 6 weist in z-Richtung einen ersten Unterabschnitt 18 und einen zweiten Unterabschnitt 20 auf. Der proximale Abschnitt 18 weist entgegen der z-Richtung einen proximalen Befestigungsabschnitt 22, einen Zwischenabschnitt 24 und einen weiteren Abschnitt 25 auf.

Zwischen dem weiterem Abschnitt 16 und dem ersten Unterabschnitt 18 befindet sich eine Ausnehmung 26, die im Wesentlichen quer zur Längsachse 10 des Schließabschnitts 6 verläuft. Des Weiteren ist die Ausnehmung 26 radial außenliegend ausgeführt. Die Ausnehmungen 26 schließt durch den weiteren Abschnitt 16 und den ersten Unterabschnitt 18 einen Winkel 28 ein.

Der Schließabschnitt 6 weist in der Montagestellung zwischen dem ersten Unterabschnitt 18 und dem zweiten Unterabschnitt 20 eine Ausnehmung 30 auf, die insbesondere im Wesentlichen quer zur Längsachse 10 des Schließabschnitts 6 verläuft. Die Ausnehmung 30 ist radial innenliegend ausgeführt. Die Ausnehmung 30 schließt mittels der beiden Unterabschnitte 18 und 20 einen Winkel 32 ein.

Zwischen dem zweiten Unterabschnitt 20 und dem weiteren Abschnitt 25 ist eine radial außenliegende Ausnehmung 34 angeordnet, die im Wesentlichen quer zur Längsachse 10 des Schließabschnitts 6 verläuft. Die Ausnehmung 34 schließt mittels des zweiten Unterabschnitts 20 und des weiteren Abschnitts 25 einen Winkel 36 ein.

Die Ausnehmung 30 wird allgemein als erste Ausnehmung bezeichnet. Die Ausnehmungen 26 und 34 werden allgemein auch als zweite Ausnehmung bezeichnet. Eine Addition der Winkel 28 und 36 ergibt im Wesentlichen den Winkel 32. In dem gezeigten Querschnitt in Figur 1 weist der Schließabschnitt 6 eine im Wesentlichen konvexe Außenkontur 38 auf. Selbstverständlich kann die Außenkontur 38 auch eine andere Form aufweisen.

Das Bauteil 2 weist eine dritte Ausnehmung 40 auf, die sich entgegen der z-Richtung im Wesentlichen längs des Bauteils 2 erstreckt. Die dritte Ausnehmung 40 ist zur Aufnahme einer Antriebsstange eines Ventilantriebs ausgestaltet. Der Ventilantrieb befindet sich in nicht gezeigter Form ausgehend von dem Bauteil 2 in der z-Richtung. Ausgehend von dem Schließabschnitt 6 weist das Bauteil 2 zum einen in z-Richtung den proximalen Befestigungsabschnitt 22 auf, und das Bauteil 2 weist entgegen der z-Richtung den distalen Befestigungsabschnitt 14 auf. Damit weist das Bauteil 2 zu beiden Seiten des Schließabschnitts 6 jeweils den distalen Befestigungsabschnitt 14 und den proximalen Befestigungsabschnitt 22 auf. Der distale Befestigungsabschnitt 14 weist in der Ausnehmung 40 ein Innengewinde auf. Der proximale Befestigungsabschnitt 22 weist eine dem distalen Befestigungsabschnitt 14 abgewandte Abstützfläche 42 auf. Das Innengewinde und die Abstützfläche 42 sind derart ausgestaltet, um mittels eines Abstützens der Antriebsstange an der Abstützfläche 42 des proximalen Befestigungsabschnitts 22 und mittels eines Eindrehens der Antriebsstange, die ein zu dem Innengewinde des distalen Befestigungsabschnitt 14 korrespondierendes Außengewinde aufweist, in das Innengewinde des distalen Befestigungsabschnitts 14 den Schließabschnitt 6 zu Stauchen. Damit sind die Befestigungsabschnitte 14 und 22 derart ausgestaltet, dass mittels der Antriebsstange die Länge des Schließabschnitts 6 beeinflussbar ist. So wird bei einem Eindrehen der Antriebsstange in den distalen Befestigungsabschnitt 14 die Antriebsstange durch ein Anliegen an der Abstützfläche 42 den distalen Abschnitt 4 auf den proximalen Abschnitt 8 zubewegen, da die Übergänge des distalen Abschnitts 4 zu dem Schließabschnitt 6 und des Schließabschnitts 6 zu den proximalen Abschnitt 8 und dem Übergang zwischen den beiden unteren Abschnitten 18 und 20 des Schließabschnitts 6 derart flexibel ausgeführt sind, dass diese Übergänge ein Zusammenfalten des Schließabschnitts 6 ermöglichen. Selbstverständlich können die Befestigungsabschnitte 14 und 22 auch andersartig ausgeführt sein. Beispielsweise kann die Antriebsstange auch mittels eines Stiftes, der sowohl durch den Befestigungsabschnitt 14 als auch zumindest teilweise durch die Antriebsstange geführt wird, zu dem distalen Abschnitt 4 festgelegt werden, wobei der Befestigungsabschnitt 22 beispielsweise mit einer Schraubung, das heißt einen Innen- und Außengewinde, versehen ist.

Der Schließabschnitt 6 ist damit derart ausgebildet, dass eine Stauchung des Schließabschnitts 6 entlang der Achse 10 des Bauteils 2, insbesondere entlang einer Längsachse des Bauteils 2, zu einer Vergrößerung des Schließabschnitts 6 in einer xy-Ebene führt.

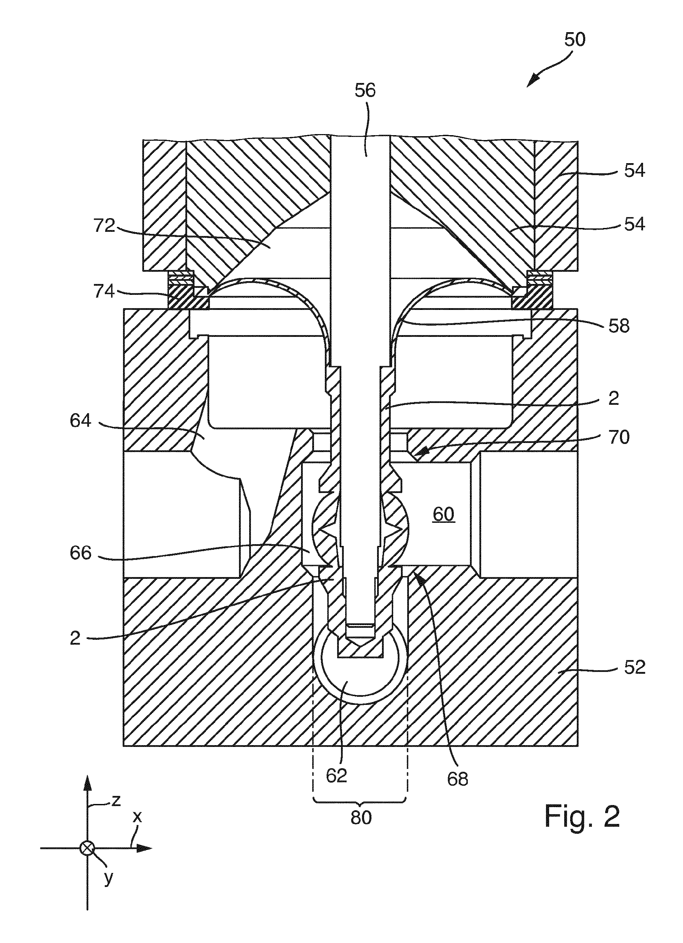

Figur 2 zeigt eine Ventileinrichtung 50 in einer Montagestellung. In der gezeigten Montagestellung kann sich ein Ventilkörper 52 beabstandet von einem Antriebskörper 54 für den Ventilantrieb befinden. Die Antriebsstange 56 ist in nicht gezeigter Form mit dem Ventilantrieb verbunden. In der in Figur 2 gezeigten Ausführungsform weist das Bauteil 2 eine Membran 58 auf. Selbstverständlich sind auch Ausführungen ohne die Membran 58 denkbar. Mittels der Membran 58 kann insbesondere die Antriebsstange 56 über das Bauteil 2 vor Fluiden, die mittels der Ventileinrichtung 50 geschaltet werden, geschützt werden.

Der Ventilkörper 52 umfasst einen Anschluss 60, einen Anschluss 62 und einen Anschluss 64. Ein Ventilraum 66 weist hin zu dem Anschluss 62 einen ersten Sitzbereich 68 und hin zu dem Anschluss 64 einen zweiten Sitzbereich 70 auf. In dem Montagezustand des Bauteils 2 weist dieses einen ersten Außendurchmesser 80 auf, der zumindest kleiner ist als der kleinste Innendurchmesser des zweiten Sitzbereichs 70. Durch ein eventuelles weiteres Zusammenpressen des Schließabschnitts 6 (in eine xy-Ebene) kann der erste Außendurchmesser 80 auch kleiner sein wie dargestellt. Zu einer Montage wird das Bauteil 2 entgegen der z-Richtung in den Ventilraum 66 eingeführt. Die Stauchung des Schließabschnitts 6 kann nach der Einführung durchgeführt werden, um den Endmontagezustand zu erreichen. Der in Figur 2 nicht gezeigte Endmontagezustand mit dem zweiten Außendurchmesser wird durch eine zuvor erläuterte Eindrehung der Antriebsstange 56 in ein Innengewinde des Bauteils 2 erreicht.

Ein Antriebskörper 54 umfasst einen Membranraum 72, der in nicht gezeigter Form über einen Druckausgleich verfügt, sodass die Membran 58 an den Innenwänden des Membranraumes 72 anliegen kann. Beispielsweise mittels einer Schraube 74 oder mehrerer Schrauben wird der Antriebskörper 54 fluiddicht mit dem Ventilkörper 52 verbunden, um den Endmontagezustand der Ventileinrichtung zu erreichen.

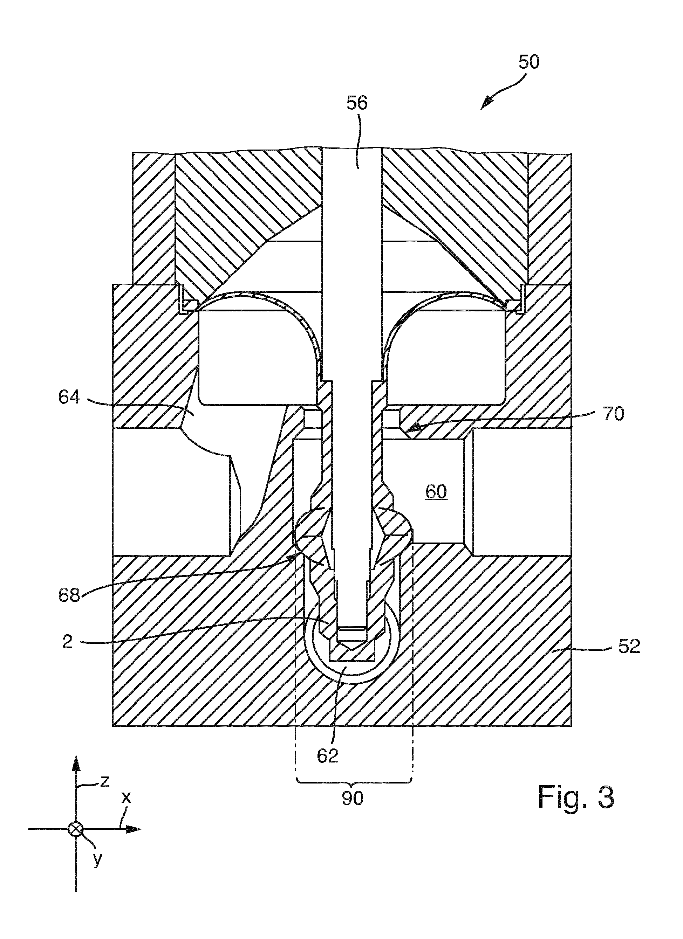

Figur 3 zeigt die Ventileinrichtung 50 aus Figur 2 in dem Endmontagezustand. Das Bauteil 2 weist einen zweiten Außendurchmesser 90 auf, der größer ist als der erste Außendurchmesser 80. Des Weiteren ist in der Figur 3 eine untere Stellung des Bauteils 2 gezeigt, in der der Schließabschnitt 6 an dem Sitzbereich 68 komplett anliegt und die Verbindung von dem Anschluss 60 zu dem Anschluss 62 im Wesentlichen komplett verschließt. Die Verbindung von dem Anschluss 60 zu dem Anschluss 64 hingegen ist geöffnet.

Das Bauteil 2 ist aus einem plastisch verformbaren oder elastisch verformbaren Material hergestellt. Die Ventileinrichtung 50 ist zur Absperrung oder Regelung eines Durchflusses von strömenden Fluiden vorgesehen und umfasst das Bauteil 2.

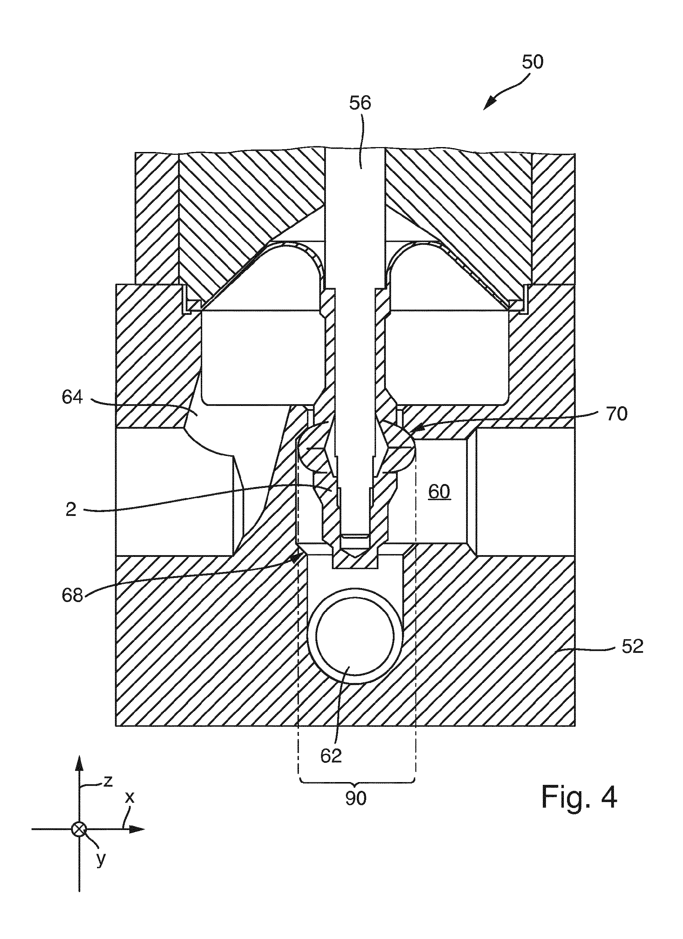

Figur 4 zeigt die Ventileinrichtung 50 aus den vorhergehenden Figuren 2 und 3 mit dem Bauteil 2 in dem Endmontagezustand und der Antriebsstange 56 in einer oberen Stellung, in der der Schließabschnitt 6 im Wesentlichen an dem Sitzbereich 70 anliegt und diesen im Wesentlichen komplett verschließt. Damit gibt das Bauteil 2 bzw. der Schließabschnitt 6 eine Verbindung von dem Anschluss 60 zu dem Anschluss 62 frei und verschließt eine Verbindung von dem Anschluss 60 zu dem Anschluss 64. Selbstverständlich kann das Bauteil 2 auch für andere Ventileinrichtungen wie die Ventileinrichtung 50 verwendet werden. Beispielsweise kann das Bauteil 2 auch nur mit einem Sitzbereich zusammenwirken und somit nur Einfluss auf den Durchfluss von einem Einlass zu einem Auslass haben.

## Patentansprüche

1. Bauteil (2) für eine Ventileinrichtung (50), wobei das Bauteil (2) einen Schließabschnitt (6) aufweist, der in einem Endmontagezustand zum Verschließen eines Sitzbereichs (68; 70) der Ventileinrichtung (50) ausgebildet ist, **dadurch gekennzeichnet, dass** der Schließabschnitt (6) in einem Montagezustand einen ersten Außendurchmesser (80) aufweist, und dass der Schließabschnitt (6) in dem Endmontagezustand einen zweiten Außendurchmesser (90) aufweist.

2. Bauteil (2) nach Anspruch 1, wobei der zweite Außendurchmesser (90) größer ist als der erste Außendurchmesser (80).

3. Bauteil (2) nach Anspruch 1 oder 2, wobei der Schließabschnitt (6) derart ausgebildet ist, dass eine Stauchung des Schließabschnitts (6) entlang einer Achse (10) des Bauteils (2), insbesondere entlang einer Längsachse des Bauteils (2), zu einer Vergrößerung des Schließabschnitts (6) auf den zweiten Außendurchmesser (90) führt.

4. Bauteil (2) nach Anspruch 3, wobei der Schließabschnitt (6) zwischen einem ersten Unterabschnitt (18) und einem zweiten Unterabschnitt (20) eine erste insbesondere im Wesentlichen quer zur Längsachse (10) des Schließabschnitts (6) verlaufende Ausnehmung (30) aufweist.

5. Bauteil (2) nach Anspruch 3 oder 4, wobei der Schließabschnitt (6) zu seinen Enden hin jeweils eine zweite insbesondere im Wesentlichen quer zur Längsachse (10) des Schließabschnitts (6) verlaufende Ausnehmung (26; 34) aufweist.

6. Bauteil (2) nach Anspruch 4 und 5, wobei die erste Ausnehmung (30) radial innen liegend ausgeführt ist, und wobei die zweite Ausnehmung (26; 34) radial außen liegend ausgeführt ist.

7. Bauteil (2) nach einem der vorstehenden Ansprüche, wobei der Schließabschnitt (6) in einem Querschnitt eine im Wesentlichen konvexe Außenkontur (38) aufweist.

8. Bauteil (2) nach einem der vorstehenden Ansprüche, wobei das Bauteil (2) eine insbesondere längs durch den Schließabschnitt (6) verlaufende dritte Ausnehmung (40) aufweist, die derart ausgestaltet ist, dass eine Antriebsstange (56) eines Ventilantriebs in der dritten Ausnehmung (40) aufnehmbar ist, wobei das Bauteil (2) zu beiden Seiten des Schließabschnitts (6) jeweils einen distalen Befestigungsabschnitt (14) und einen proximalen Befestigungsabschnitt (22) aufweist, wobei die Befestigungsabschnitte (14, 16) derart ausgestaltet sind, dass mittels der Antriebsstange (56) die Länge des Schließabschnitts (6) entlang der Längsachse (10) beeinflussbar ist.

9. Bauteil (2) nach Anspruch 8, wobei der distale Befestigungsabschnitt (14) ein Innengewinde aufweist, wobei der proximale Befestigungsabschnitt (22) eine dem distalen Befestigungsabschnitt (14) abgewandte Abstützfläche (42) aufweist, wobei das Innengewinde und die Abstützfläche (42) derart ausgestaltet sind, um mittels eines Abstützens der Antriebsstange (56) an der Abstützfläche (42) des proximalen Befestigungsabschnitts (22) und mittels eines Eindrehens der Antriebsstange (14), die ein zu dem Innengewinde des distalen Befestigungsabschnitts (14) korrespondierendes Außengewinde aufweist, in das Innengewinde den Schließabschnitt (6) zu stauchen.

10. Bauteil (2) nach einem der vorstehenden Ansprüche, das das Material des Bauteils (2) ein Thermoplast ist, insbesondere ein Polyethylen (PE), Polypropylen (PP), ein Acrylnitril-Butadien-Styrol (ABS), ein Polyamid (PA), ein Polylactat (PLA), ein Polymethylmethacrylat (PMMA), ein Polycarbonat (PC), ein Polyethylenterephthalat (PET), ein Polystyrol (PS), ein Polyetheretherketon (PEEK), ein Polyvinylchlorid (PVC), ein Polyphenylensulfon (PPSU) oder ein Polyvinylidenfluorid (PVDF).

11. Ventileinrichtung (50) zur Absperrung oder Regelung eines Durchflusses von strömenden Fluiden umfassend ein Bauteil (2) nach einem der vorstehenden Ansprüche.
